# EUROPEAN PATENT APPLICATION

(11) **EP 2 366 614 A1**
(43) Date of publication of application: **21.09.2011**
(21) Application number: 10425055.0
(22) Date of filing: 05.03.2010
(51) Int. Cl.: B62J 15/00

(54) **Modular fender for bicycles and the like**

(71) Applicant: Roto S.r.L., 40050 Monterenzio, Bisano (BO) (IT)
(72) Inventor: Antonelli, Andrea, 40068 San Lazzaro di Savena (IT)
(74) Representative: Modiano, Micaela Nadia

(57) **Abstract**

A modular fender (1) with simplified production, particularly for bicycles and the like, comprising an elongated body that is substantially conduit-shaped, the elongated body comprising at least two parts (3, 4), which are distinct and are made entirely of plastics and mutually associable by mechanical interconnection means (2).

## Description

The present invention relates to a modular fender with simplified production, particularly for bicycles and the like, and to a mold used for its production.

In common language, the term "fender" generally refers to a conduit-shaped element that surrounds the upper part of the wheels of a vehicle to prevent splashes of water, mud and any debris produced by the rolling of the wheels from reaching the user of the vehicle or other parts thereof, dirtying them.

Hereinafter, the term "fender" will be understood to mean the element described above.

Usually, fenders of the known type, particularly the ones designed to be fitted on men's or women's bicycles, are provided by means of a plate made of metal, for example aluminum, which is shaped like a conduit, or by an elongated body, also shaped like a conduit, which is made of plastics and has a metallic lamina that acts as a supporting element.

In order to provide known types of fenders with these materials, methods such as calendering and/or extrusion are used.

Therefore, in the background art no fenders are known which are made entirely of plastics by means of an injection molding process and which are capable of replicating the radii of curvature of fenders obtained by calendering.

This is substantially due to the fact that the final size and curvature of the fender, by having to follow respectively the dimensions and the curvature of the wheel, are such as to occupy considerable space. This space occupation would require a large mold, which is difficult to provide, equipped with a series of movable carriages in order to allow the extraction of the molded product, and would therefore lead to considerably higher production costs than the production methods of the background art.

The aim of the present invention is to provide a fender made entirely of plastics, overcoming the limitations of the background art.

Within this aim, an object of the present invention is to provide a fender that can be provided entirely by injection molding with a single mold.

Another object of the invention is to provide a fender that is highly reliable, relatively easy to provide and has competitive costs.

This aim, as well as these and other objects that will become better apparent hereinafter, are achieved by a modular fender with simplified production, particularly for bicycles and the like, which comprises an elongated body that is substantially conduit-shaped, characterized in that said elongated body comprises at least two distinct parts, made entirely of plastics and mutually associable by mechanical interconnection means.

Further characteristics and advantages of the invention will become better apparent from the detailed description that follows of a preferred but not exclusive embodiment of a modular fender with simplified production, particularly for bicycles and the like, according to the invention, illustrated by way of non-limiting example in the accompanying drawings, wherein:

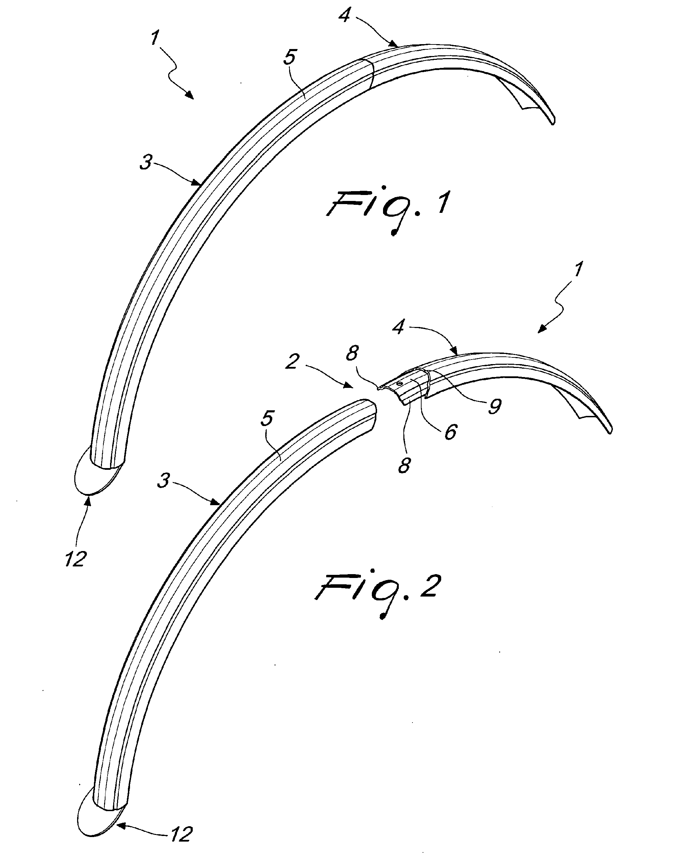

Figure 1 is a perspective view of a preferred but not exclusive embodiment of a modular fender with simplified production, particularly for bicycles and the like, according to the invention;
Figure 2 is an exploded perspective view of the modular fender shown in Figure 1;

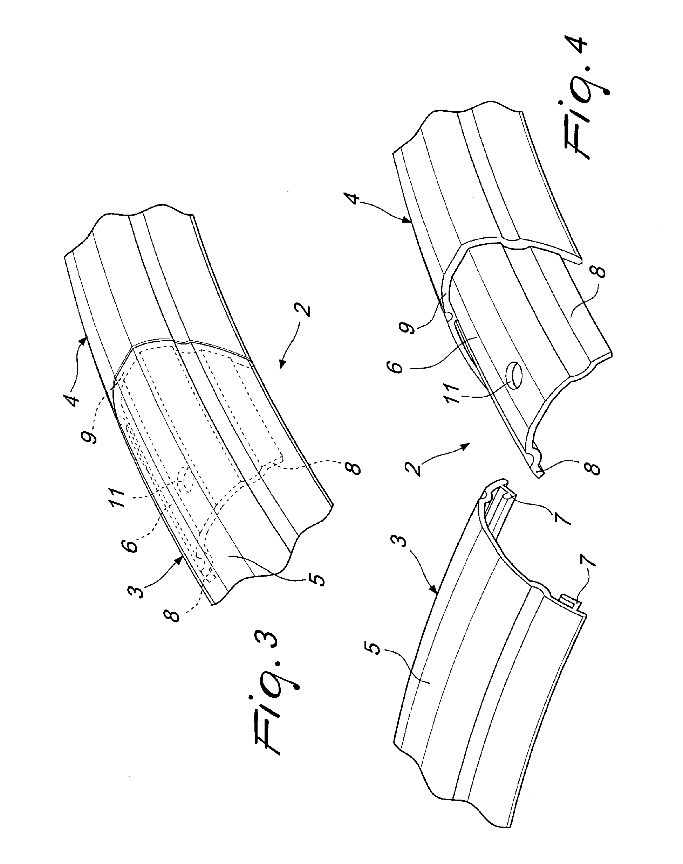

Figure 3 is an enlarged-scale perspective view of the means for a mechanical interconnection of the modular fender according to the invention;
Figure 4 is an enlarged-scale exploded perspective view of the mechanical interconnection means shown in Figure 3;

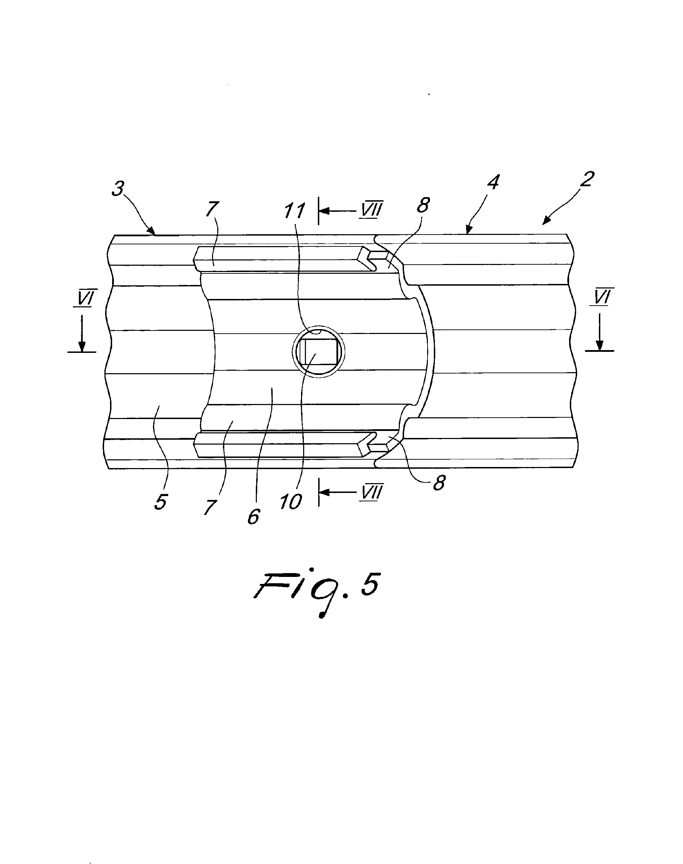

Figure 5 is an enlarged-scale bottom plan view of the means for mechanical interconnection of the modular fender according to the invention;

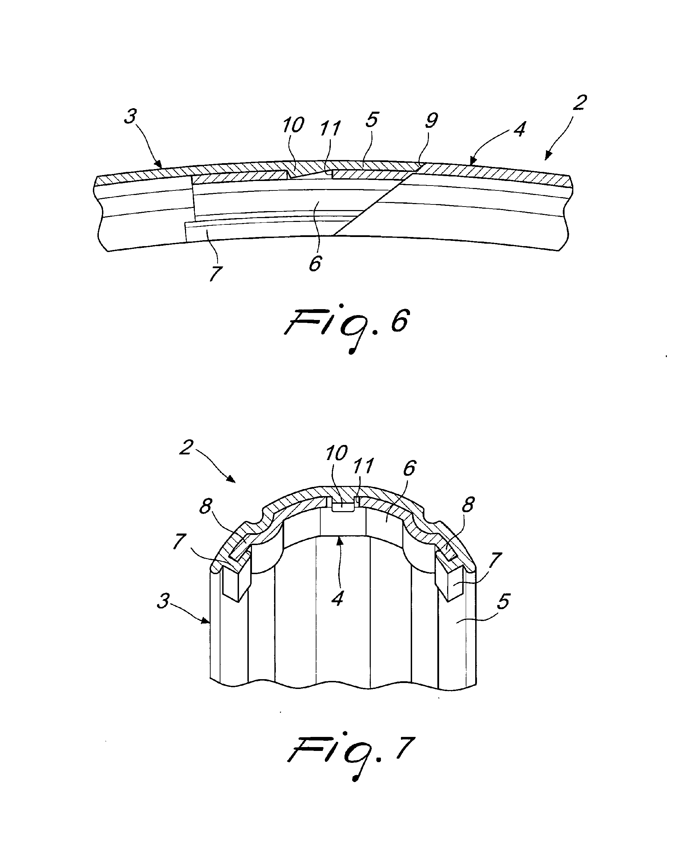

Figure 6 is a longitudinal sectional view of the mechanical interconnection means shown in Figure 5, taken along the line VI-VI;
Figure 7 is a transverse sectional view of the mechanical interconnection means shown in Figure 5, taken along the line VII-VII.

With reference to the figures, a modular fender with simplified production, particularly for bicycles and the like, according to the invention, generally designated by the reference numeral 1, comprises a conduit-shaped elongated body which has a curvature directed toward its convex side so that it can partially wrap itself around the wheel of the vehicle, such as for example a man's or woman's bicycle, on which it is to be fitted.

According to the invention, such elongated body is composed of at least two parts 3 and 4, or optionally even more than two, which are entirely made of plastics and can be mutually associated by mechanical interconnection means 2 so as to form a mating that is stable and durable over time.

The parts 3 and 4 are produced simultaneously by injection molding with a single mold.

In greater detail, as will become better apparent hereinafter, the parts 3 and 4 have a shape that is adapted to make the parts 3 and 4 producible simultaneously by injection molding with a single mold provided with at least one shape for each part 3 or 4.

Advantageously, the mechanical interconnection means 2 comprise at least one shape mating formed between a first end portion 5 and a second end portion 6, respectively formed by the two parts 3 and 4 that can be mutually associated.

More specifically, such shape mating is of the male-female type, with the first end portion 5 and the second end portion 6 forming respectively the female element and the male element of such shaped mating.

In the illustrated embodiment, as already noted, the elongated body, which forms the modular fender 1, is conduit-shaped, so that it has a substantially semicircular transverse cross-section with the center of curvature directed toward the wheel side of the modular fender 1.

More precisely, on the outer surface of the elongated body, i.e., on the outer surfaces that lie opposite the internal surfaces designed to be directed toward the wheel, of the two parts 3 and 4, there is a series of longitudinal ribs, which follow the extension of the modular fender 1 and are adapted to increase the flexural and torsional rigidity of the fender.

As regards the first end portion 5 of the part 3, it has a substantially arc-like transverse cross-section which forms, at its end portions and at its internal surface, two guides 7 that extend longitudinally with respect to the elongated body at at least part of the first end portion 5.

More precisely, the two guides 7 extend only along a part of the first end portion 5 with a configuration which, if viewed on a transverse plane, is substantially L-shaped, with the stem of such L shape extending substantially at right angles from the internal surface of the first end portion 5 and with the foot of such L shape directed toward the central part of the first end portion 5 and arranged on the side opposite such internal surface of the first end portion 5 with respect to the stem of such L shape.

Likewise, the second end portion 6 of the part 4 has a substantially arc-shaped transverse cross-section, which forms, at its outer surface, a profile that substantially corresponds to the profile of the first end portion 5 formed by its convex surface.

More precisely, the second end portion 6 comprises two lateral regions 8 that extend longitudinally with respect to the elongated body at at least part of the second end portion 6 and are adapted to be inserted in the two guides 7.

Moreover, the second end portion 6 is depressed with respect to the first end portion 5 to allow the overlap of the first end portion 5 and the second end portion 6, ensuring a superficial continuity of the elongated body on its outer side with the two parts 3 and 4 mutually associated.

More particularly, thanks to the shape mating defined by the configurations of the first end portion 5 and of the second end portion 6, it is possible to join the two parts 3 and 4 by inserting the second end portion 6 below the first end portion 5 with the lateral regions 8 of the first end portion 5 inserted in the guides 7.

Further, the lowering of the second end portion 6 with respect to the general extension of the part 4 occurs by means of a step that forms an abutment surface 9 for the part 3 that acts as a stroke limit point for the insertion of the part 4 in the part 3.

In order to allow the mutual locking of the parts 3 and 4 once they have been mutually associated following the shape mating described earlier, the mechanical interconnection means 2 comprise interlocking means which are formed between the first end portion 5 and the second end portion 6.

More precisely, such interlocking means comprise at least one engagement tooth 10 and at least one respective engagement seat 11, provided for example by a through hole, which are formed respectively on the two concave and convex surfaces of the first end portion 5 and of the second end portion 6 which face each other with the end portions 5 and 6 mechanically mated.

As already mentioned earlier, the parts 3 and 4, given the geometric conformity and their reduced dimensions, are provided by injection molding in which an appropriately provided mold with reduced space occupation is used.

In greater detail, according to a first embodiment, a pair of molds is used, each of which is assigned to the production of a respective part 3, 4 of the fender 1.

As an alternative, a single mold can have a plurality of side-by-side shapes that have a simple geometry, since they have to reproduce fender parts with reduced curvature and dimensions, thus avoiding the use of movable carriages, which would increase considerably the costs of the mold.

Conveniently, such mold, which is provided for the injection molding of the modular fender 1 in a single injection-molding process, can comprise a further shape for also providing in a single molding cycle a fender constituted by a single part.

For example, such mold can be used to provide also the fender of the front wheel of a bicycle, which can be provided monolithically since it has smaller dimensions than the fender of the rear wheel.

By means of a single molding cycle it is thus possible to provide both fenders (the front one and the rear one) designed to be fitted on the same bicycle.

It should also be noted that by means of the molding process it is possible to provide shapes that are more complex than the ones that can be obtained by calendering and therefore for example it is possible to obtain directly by molding fenders 1 provided with splash guards 12, without the need to fit them at a later time, at the end of calendering, as instead occurs with known fenders, and this leads to an evident saving in production times and costs.

In practice it has been found that the modular fender with simplified production, particularly for bicycles and the like, according to the invention, fully achieves the intended aim and objects, since the fact that the fender is composed of a plurality of small parts allows the provision of such parts separately from each other by means of the injection molding technique.

Moreover, the provision of the modular fender according to the invention, by means of such injection molding technique, makes it possible to obtain a fender that is entirely made of plastics with a mold whose dimensions and space occupation are limited.

More precisely, the choice to use two or more parts 3, 4, according to the illustrated possibilities, makes it possible to obtain, by injection molding, fenders 1 whose dimensions and curvatures are substantially adapted to replicate the considerable ones of wheels for men's or women's bicycles without having to resort to manufacturing processes that use calendaring.

Although the modular fender with simplified production according to the invention has been conceived to be fitted to bicycles, and particularly to men's or women's road bicycles, it is adapted to be used on other bicycles, for example children's bicycles, and on other vehicles, such as for example scooters or motorcycles in general.

Finally, it is useful to specify that the possibility is provided, and is within the protective scope claimed herein, to provide modular fenders 1 constituted by three or more parts 3, 4 (which can even be obtained from the same mold), which can be mutually associated in pairs thanks to the interconnection means provided at the respective end portions 5, 6.

The modular fender with simplified production, particularly for bicycles and the like, thus conceived is susceptible of numerous modifications and variations, all of which are within the scope of the appended claims.

All the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A modular fender (1) with simplified production, particularly for bicycles and the like, comprising an elongated body that is substantially conduit-shaped, **characterized in that** said elongated body comprises at least two distinct parts (3, 4), made entirely of plastics and mutually associable by mechanical interconnection means (2).

2. The modular fender (1) according to claim 1, **characterized in that** said at least two parts (3, 4) are provided by injection molding.

3. The modular fender (1) according to one or more of the preceding claims, **characterized in that** said mechanical interconnection means (2) comprise at least one shape mating that is provided between a first end portion (5) and a second end portion (6), respectively, which are formed by two of said at least two parts (3, 4) that can be mutually associated.

4. The modular fender (1) according to one or more of the preceding claims, **characterized in that** said shape mating is of the male-female type with said first end portion (5) and said second end portion (6) forming respectively the female element and the male element of said shape mating.

5. The modular fender (1) according to one or more of the preceding claims, **characterized in that** said first end portion (5) has a substantially arc-shaped transverse cross-section and forms, at its end portions and on the side designed to be directed toward the wheel, two guides (7) that extend longitudinally with respect to said elongated body at at least part of said first end portion (5).

6. The modular fender (1) according to one or more of the preceding claims, **characterized in that** said second end portion (6) has a substantially arc-shaped transverse cross-section, which forms, from its outer surface, a profile that substantially corresponds to the profile of said first end portion (5) from its convex surface and comprises two lateral regions (8) that extend longitudinally with respect to said elongated body at at least part of said second end portion (6) and are adapted to be inserted in said two guides (7), said second end portion (6) being depressed with respect to said first end portion (5) to form an abutment surface (9) as a stroke limiting point for insertion of one of said at least two parts (3, 4) in the other one of said at least two parts (3, 4) and to allow the overlap of said first end portion (5) and said second end portion (6), ensuring a surface continuity of said elongated body on its outer surface with said at least two parts (3, 4) mutually associated.

7. The modular fender (1) according to one or more of the preceding claims, **characterized in that** said mechanical interconnection means (2) comprise interlocking means which are formed between said first end portion (5) and said second end portion (6) for their mutual locking.

8. The modular fender (1) according to one or more of the preceding claims, **characterized in that** said interlocking means comprise at least one engagement tooth (10) and at least one respective engagement seat (11), which are formed respectively on two surfaces of said first end portion (5) and of said second end portion (6) which face each other with said first end portion (5) and said second end portion (6) coupled mechanically.

9. The modular fender (1) according to one or more of the preceding claims, **characterized in that** said at least two parts (3, 4) have a shape that is adapted to make said at least two parts (3, 4) producible simultaneously by means of a single mold provided with at least one shape for each one of said at least two parts (3, 4).

10. A mold for injection molding, **characterized in that** it comprises at least one shape for each part (3, 4) of at least one modular fender (1) with simplified production, particularly for bicycles and the like, according to one or more of claims 1 to 9, for its production in a single injection-molding process.
